# EUROPÄISCHE PATENTSCHRIFT

(11) **EP 2 243 979 B1**
(45) Veröffentlichungstag und Bekanntmachung des Hinweises auf die Patenterteilung: **02.10.2013**
(21) Anmeldenummer: 10160118.5
(22) Anmeldetag: 16.04.2010
(51) Int. Cl.: F16F 9/46

(54) **Verstellbarer Schwingungsdämpfer mit einem Notbetriebventil**
Adjustable vibration absorber with an emergency valve
Amortisseur d'oscillations réglable doté d'une soupape de fonctionnement d'urgence

(30) Priorität: 23.04.2009 DE 102009002582
(43) Veröffentlichungstag der Anmeldung: 27.10.2010
(73) Patentinhaber: ZF Friedrichshafen AG, 88038 Friedrichshafen (DE)
(72) Erfinder: Förster, Andreas, 97422 Schweinfurt (DE)

(56) Entgegenhaltungen:
- EP-A1- 0 561 404
- EP-A1- 0 708 268
- EP-A2- 0 433 701
- DE-A1- 3 917 064

## Beschreibung

Die Erfindung betrifft einen verstellbaren Schwingungsdämpfer gemäß dem Oberbegriff von Patentanspruch 1.

Aus der gattungsbildenden DE 39 17 064 A1 ist ein verstellbarer Schwingungsdämpfer bekannt, der zusätzlich zu einem magnetkraftbetätigten Dämpfventil ein Notbetriebventil aufweist, das dann wirksam wird, wenn z. B. die Stromversorgung einer Magnetspule des Dämpfventils unterbrochen ist.

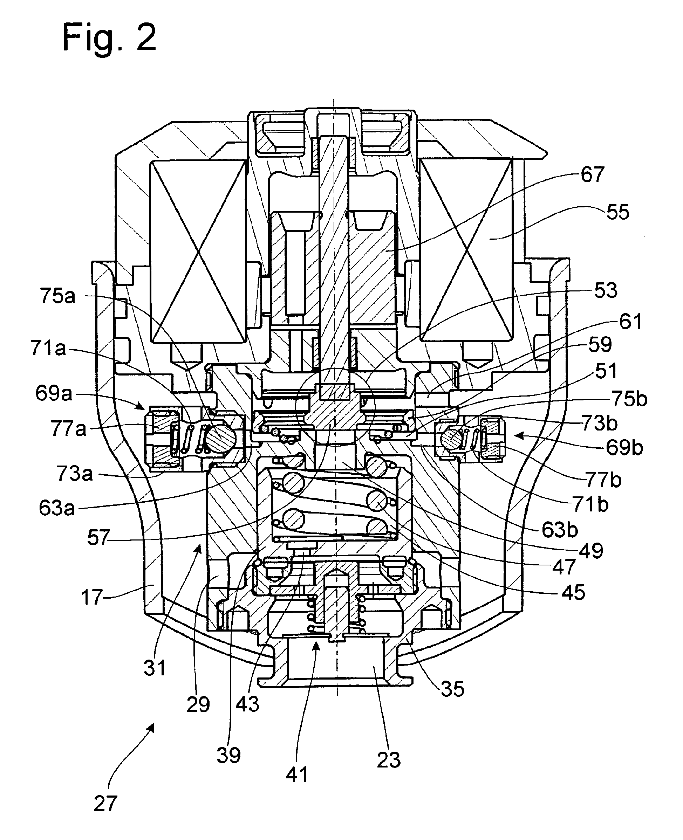

In der Ausführung nach Fig. 2 der DE 39 17 064 A1 umfasst das Notbetriebventil einen Durchtrittskanal, dessen Austrittsöffnung von einem Ventilkörper zumindest teilweise abgedeckt wird. Bei der Fig. 2 ist es ersichtlich, dass es sich um eine Prinzipdarstellung handelt, da keinerlei Teilungsfugen vorliegen, die z. B. die Montage der Ventilscheibe 105 des Notbetriebventils voraussetzen.

Aus der ATZextra "Mercedes-Benz E-Klasse", Ausgabe Januar 2009, ist ebenfalls ein verstellbare Dämpfventileinrichtung mit einem Notbetriebventil bekannt. Auch dieses Notbetriebventil ist in einer Parallelströmungsverbindung zu einer Abflussöffnung aus einem Steuerraum für das verstellbare Dämpfventil angeordnet. In dem Bild 17 auf der Seite 138 ist der eng begrenzte Bauraum erkennbar. Das Notbetriebventil ist als rotes radial angeordnetes Bauteil erkennbar. Ein derartiges Druckbegrenzungsventil, umfassend eine Kugel, die von einer Feder in Schließrichtung vorgespannt wird, erzeugt eine lineare Dämpfkraftkennlinie, die jedoch noch nicht dem angestrebten Kennlinienverlauf entspricht. Folglich müssen im Notbetrieb noch Komfortnachteile hingenommen werden, die es aufgabengemäß zu minimieren gilt.

Erfindungsgemäß wird die Aufgabe dadurch gelöst, dass dem Notbetriebventil ein zweites Notbetriebventil parallel geschaltet ist, das eine vom ersten Notbetriebventil abweichende Öffnungscharakteristik aufweist.

Der große Vorteil besteht darin, dass über die Parallelschaltung von mindestens zwei Notbetriebventilen eine gekrümmte Dämpfkraftkennlinie für den Notbetrieb erreicht wird. An jeweils einem Schnittpunkt zweier Dämpfventilkennlinien liegt ein Übergangspunkt vor, an dem sich die Steigung der Dämpfkraftkennlinie signifikant ändert, so dass auch degressive Dämpfkraftkennlinien realisierbar sind.

In weiterer Ausgestaltung weist das Dämpfventil einen Ventilgehäuseeinsatz auf, in dem ein vom Aktuator zumindest mittelbar angesteuerter Dämpfventilkörper angeordnet ist, wobei der Ventilgehäuseeinsatz mehrere Notbetriebkanäle aufweist, die mit Notbetriebventilen bestückt sind. Der Ventilgehäuseeinsatz bietet den Vorteil, dass die Notbetriebventile sehr gut zugänglich und damit auch leicht montierbar sind.

Die Notbetriebkanäle im Ventilgehäuseeinsatz sind als Radialkanäle ausgeführt, so dass der Ventilgehäuseeinsatz in Umfangsrichtung beliebig in einem äußeren Dämpfventilgehäuse montiert werden kann.

Zur weiteren Vereinfachung der Strömungswege im Dämpfventile sind die Radialkanäle an einem Sammelraum angeschlossen, der wiederum mit der Abflussöffnung des Dämpfventils verbunden ist.

Das Notbetriebventil weist ein Gehäuse auf, in dem ein Ventilelement angeordnet ist, das von einer innerhalb des Gehäuses angeordneten Schließfeder in eine Schließposition vorgespannt ist, wobei die Schließfeder in ihrer Schließkraft einstellbar ist. Der Vorteil dieser Bauweise besteht darin, dass das Notbetriebventil vor dem Einbau auf seine Kennlinie eingestellt werden kann.

Zur Befestigung ist das Gehäuse des Notbetriebventils im Ventilgehäuseeinsatz eingeschraubt.

Anhand der folgenden Figurenbeschreibung soll die Erfindung näher erläutert werden.

Es zeigt:
- Fig. 1: Darstellung der Einbausituation der Dämpfventileinrichtung an einem Schwingungsdämpfer
- Fig. 2: Verstellbare Dämpfventileinrichtung mit mehreren Notbetriebventilen
- Fig. 3: Verstellbare Dämpfventileinrichtung mit Dämpfventilaufsatz als Notbetriebventil
- Fig. 4: Dämpfkraftkennlinie in Notbetriebsfunktion

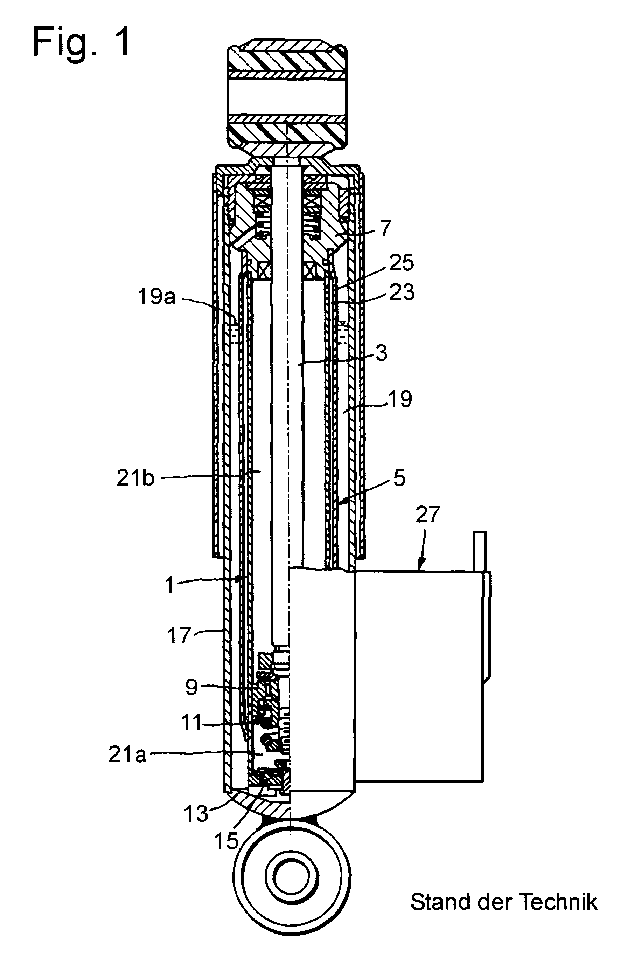

In Fig. 1 weist ein Schwingungsdämpfer einen Zylinder 1 auf, in dem eine Kolbenstange 3 axial beweglich angeordnet ist. Eine Führungs- und Dichtungseinheit 7 führt die Kolbenstange 3 aus dem oberen Ende des Zylinders heraus. Innerhalb des Zylinders 1 ist an der Kolbenstange 3 eine Kolbeneinheit 9 mit einer Kolbenventilanordnung 11 befestigt. Das untere Ende des Zylinders 1 ist durch eine Bodenplatte 13 mit einer Bodenventilanordnung 15 abgeschlossen. Der Zylinder 1 wird von einem Behälterrohr 17 umhüllt. Das Behälterrohr 17 und ein Zwischenrohr 5 bilden einen Ringraum 19, der eine Ausgleichskammer darstellt. Der Raum innerhalb des Zylinders 1 ist durch die Kolbeneinheit 9 in eine erste Arbeitskammer 21 a und eine zweite Arbeitskammer 21 b unterteilt. Die Arbeitskammern 21 a und 21 b sind mit Dämpfflüssigkeit gefüllt. Die Ausgleichskammer 19 ist bis zu dem Niveau 19a mit Flüssigkeit und darüber mit Gas gefüllt. Innerhalb der Ausgleichskammer 19 ist eine erste Leitungsstrecke, nämlich eine Hochdruckteilstrecke 23, gebildet, welche über eine Bohrung 25 des Zylinders 1 mit der zweiten Arbeitskammer 21 b in Verbindung steht. An diese Hochdruckteilstrecke schließt sich eine seitlich an dem Behälterrohr 17 angebaute verstellbare Dämpfventileinrichtung 27 an. Von dieser führt, nicht dargestellt, eine zweite Leitungsstrecke, nämlich eine Niederdruckteilstrecke 29, in die Ausgleichskammer 19.

Fährt die Kolbenstange 3 aus dem Zylinder 1 nach oben aus, verkleinert sich die obere Arbeitskammer 21b. Es baut sich in der oberen Arbeitskammer 21b ein Überdruck auf, der sich nur durch die Kolbenventilanordnung 11 in die untere Arbeitskammer 21a abbauen kann, solange die verstellbare Dämpfventileinrichtung 27 geschlossen ist. Wenn die verstellbare Dämpfventileinrichtung 27 geöffnet ist, so fließt gleichzeitig Flüssigkeit von der oberen Arbeitskammer 21 b durch die Hochdruckteilstrecke 23 und die verstellbare Dämpfventileinrichtung 27 in die Ausgleichskammer19. Die Dämpfcharakteristik des Schwingungsdämpfers beim Ausfahren der Kolbenstange 3 ist also davon abhängig, ob das verstellbare Dämpfventil 27 mehr oder weniger offen oder geschlossen ist.

Wenn die Kolbenstange 3 in den Zylinder 1 einfährt, so bildet sich in der unteren Arbeitskammer 21a ein Überdruck. Flüssigkeit kann von der unteren Arbeitskammer 21a durch die Kolbenventilanordnung 11 nach oben in die obere Arbeitskammer 21b übergehen. Die durch das zunehmende Kolbenstangenvolumen innerhalb des Zylinders 1 verdrängte Flüssigkeit wird durch die Bodenventilanordnung 15 in die Ausgleichskammer 19 ausgetrieben. In der oberen Arbeitskammer 21b tritt, da der Durchflusswiderstand der Kolbenventilanordnung 11 geringer ist als der Durchflusswiderstand der Bodenventilanordnung 15, ebenfalls ein steigender Druck auf. Dieser steigende Druck kann bei geöffneter Dämpfventileinrichtung 27 durch die Hochdruckteilstrecke 23 wiederum in den Ausgleichsraum 19 überfließen.

Dies bedeutet, dass bei geöffnetem Dämpfventil 27 der Stoßdämpfer auch beim Einfahren dann eine weichere Charakteristik hat, wenn die verstellbare Dämpfventileinrichtung 27 geöffnet ist und eine härtere Charakteristik, wenn die Dämpfventileinrichtung 27 geschlossen ist, genauso wie beim Ausfahren der Kolbenstange. Festzuhalten ist, dass die Strömungsrichtung durch die Hochdruckteilstrecke 23 des Bypasses immer die gleiche ist, unabhängig davon, ob die Kolbenstange ein- oder ausfährt.

Die Fig. 2 zeigt eine erste Ausführungsform der Dämpfventileinrichtung 27. In einem äußeren Gehäuse 31, das von einem Rohrstutzen des Behälterrohres 17 gebildet wird, ist ein Ventilgehäuseeinsatz 33 angeordnet. Ein unterer demontierbarer Anschluss 35 bildet einen Teil der Hochdruckteilstrecke 23. Des Weiteren trägt der Anschluss 35 eine Ventilsitzscheibe 37 für einen Hauptstufenventilkörper 39 der verstellbaren Dämpfventileinrichtung. Zwischen der Ventilsitzscheibe 37 und dem Anschluss 35 kann optional ein Einlaufventil 41 angeordnet sein.

Der Hauptstufenventilkörper 39 weist eine Durchgangsöffnung 43 auf, die die Hochdruckteilstrecke 23 mit einem Steuerraum 45 verbindet. In dem Steuerraum 45 ist mindestens eine Schließfeder 47 für den Hauptstufenventilkörper 39 angeordnet. An einem Verbindungskanal 49 des Steuerraums 45 zu einem Sammelraum 51 ist ein Vorstufenventil 53 ausgeführt, das von einer Magnetspule 55 als Aktuator willkürlich angesteuert werden kann. Ein Vorstufenventilkörper 57 bildet zusammen mit dem Verbindungskanal 49 ein Sitzventil. Je nach eingestelltem Abflussquerschnitt am Vorstufenventil 53 stellt sich innerhalb des Steuerraums 45 ein Druckniveau ein, dessen Druckkraft zusätzlich zur Schließkraft der Schließfeder 47 einer Abhubkraft in der Hochdruckteilstrecke 23 auf den Hauptstufenventilkörper 39 entgegenwirkt.

Der Vorstufenventilkörper 39 weist einen äußeren Ventilring 59 auf, der wechselweise mindestens eine Abflussöffnung 61 und mindestens zwei Notbetriebkanäle 63a; 63b ansteuert. Eine Vorspannfeder 65 spannt den Vorstufenventilkörper 57 in eine Schließposition bezogen auf die Abflussöffnung 61 vor. Die Notbetriebkanäle 63a; 63b sind in dem Ventilgehäuseeinsatz 33 als Radialkanäle ausgeführt, die wiederum an den Sammelraum 51 angeschlossen sind.

Bei einer Bestromung der Magnetspule 55 bewegt sich ein mit dem Vorstufenventilkörper 57 verbundenen Anker 67 in Richtung des Steuerraums 45. Dadurch gibt der Vorstufenventilkörper 57 schon bei sehr kleinen Strömen die Abflussöffnung 61 frei.

Wie aus der Fig. 2 ersichtlich ist, verfügt die verstellbare Dämpfventileinrichtung 27 über mindestens zwei Notbetriebventile 69a; 69b, die voneinander abweichende Öffnungscharakteristiken aufweisen. Dieses unterschiedliche Verhalten soll durch die unterschiedliche Größe der bildlichen Darstellungen der Notbetriebventile verdeutlicht werden. Abweichende äffnungscharakteristik bedeutet, dass die Öffnungskraft und die Federrate mindestens einer Schließfeder 71a; 71b der Notbetriebventile 69a; 69b unterschiedlich sind.

Jedes Notbetriebventil 69a; 69b weist ein eigenes Gehäuse 73a; 73b auf, in dem ein Ventilelement 75a; 75b in diesem Fall eine Kugel, von einer innerhalb des Gehäuses 73a; 73b angeordneten Schließfeder 71a; 71b in eine Schließposition vorgespannt wird. Die Schließfeder 71a; 71b ist in ihrer Schließkraft einstellbar, z. B. indem eine Abstützscheibe 77a; 77b für die Schließfeder 71a; 71b axial mehr oder weniger tief in das Gehäuse 73a; 73b eingeschraubt wird. Jedes Notbetriebventil 69a; 69b ist wiederum über das Gehäuse 73a; 73b im Ventilgehäuseeinsatz 33 eingeschraubt.

Im Notbetrieb, d. h. z. B. stromlose Magnetspule 55, drückt die Vorspannfeder 65 den Ventilring 59 des Vorstufenventils 53 in Richtung der Abflussöffnung 61 und verschließt diese. Mit dieser Verschließbewegung werden die Notbetriebkanäle 63a; 63b wirksam. Die vom Hauptstufenventilkörper 39 erzeugte Dämpfkraft wird dann von dem der Summe der Durchlassquerschnitte der Notbetriebventile bestimmt.

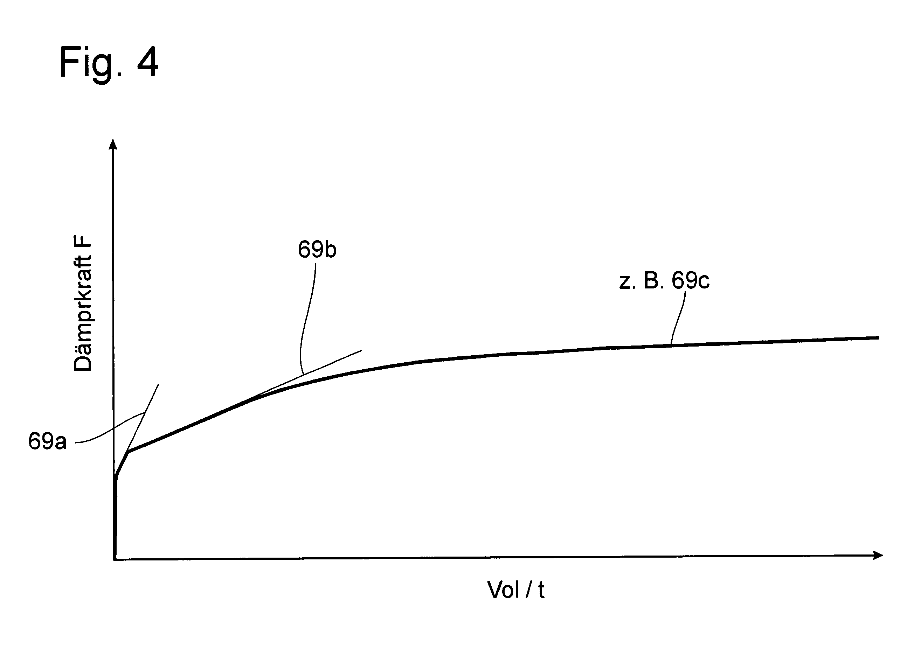

In der Fig. 4 ist eine angestrebte Dämpfkraftkennlinie dargestellt. Ein erster Kennhnienbereich wird von einem sich öffnenden ersten Notbetriebventil 69a bestimmt. Weitere Notbetriebventile 73; 69b sind noch geschlossen. Am Schnittpunkt der Kennlinien zweier Notbetriebventile 69a; 69b öffnet auch das zweite Notbetriebventil 69b, das dem ersten Notbetriebventil 69a hydraulisch parallel geschaltet ist. Ein drittes Notbetriebventil bestimmt mit seiner Öffnungscharakteristik einen dritten Kennhnienbereich. Die verschiedenen Steigungen der Kennlinienbereiche lassen sich beispielsweise durch unterschiedliche Federraten der jeweiligen Schließfedern 71 i erreichen.

Wie man weiter aus der Fig. 4 erkennt, stellt sich im Notbetrieb bei der verstellbaren Dämpfventileinrichtung ein degressives Dämpfkraftverhalten ein. Die im Normalbetrieb vom Vorstufenventilkörper 57 gestellten Abflussquerschnitte werden von den Notbetriebventilen 69a; 69b nachgebildet.

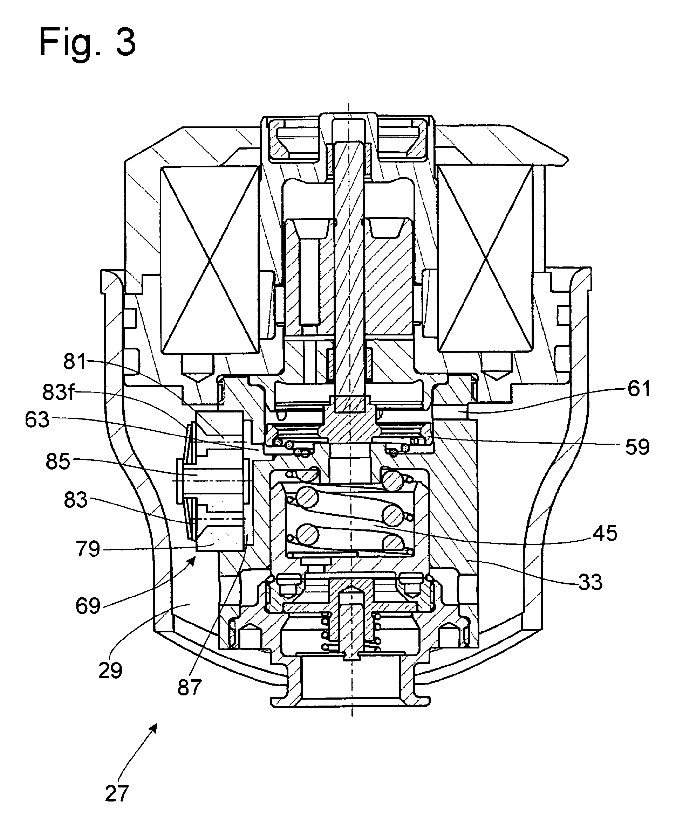

Die Fig. 3 zeigt eine Alternativlösung zur Fig. 2. Abweichend kommen nicht mehrere Notbetriebventile 69a; 69b zur Anwendung, sondern ein einziges Notbetriebventil 69 umfasst einen Dämpfventilaufsatz 79, der an dem Ventilgehäuseeinsatz 33 angeordnet ist. Als Dämpfventilaufsatz 79 kann ein einfacher Scheibenkörper verwendet werden, der außenseitig am Ventilgehäuseeinsatz 33 befestigt ist. Der Dämpfventilaufsatz 79 weist mindestens einen Durchtrittskanal 81 auf, dessen Ausgangsöffnung von mindestens einer Ventilscheibe 83 zumindest teilweise abgedeckt wird. Die mindestens eine Ventilscheibe 83 wird von einem zentralen Befestigungsmittel 85 in Verbindung mit einer Tellerfeder 83f auf den Dämpfventilaufsatz 79 vorgespannt. Durch die Bestückung des Dämpfventilaufsatzes 79 mit mindestens einer Tellerfeder 83f kann eine Dämpfkraftkennlinie gemäß Fig. 4 erreicht werden.

Zwischen dem Dämpfventilaufsatz 79 und dem Ventilgehäuseeinsatz 33 ist ein Verteilerkanal 87 ausgeführt, der den Notbetriebkanal 63 im Ventilgehäuseeinsatz 33 mit dem mindestens einen Durchtrittskanal 81 im Dämpfventilaufsatz 79 verbindet. Dabei ist der Dämpfventilaufsatz 79 in einer Stufenöffnung des Ventilgehäuseeinsatzes 33 angeordnet und stützt sich auf einem Absatz ab.

In der Notbetriebstellung des Ventilrings 59, also wenn die Abflussöffnung 61 geschlossen ist, tritt das gesamte Dämpfmedium aus dem Steuerraum 45 über den Notbetriebkanal 63 in die Stufenöffnung des Ventilgehäuseeinsatzes 33 ein und wird von dem Verteilerkanal 87 zum Durchtrittskanal 81 geführt. Das Dämpfmedium tritt über die abgehobene Ventilscheibe 83 in die Niederdruckteilstrecke aus.

### Bezugszeichenliste

- 3: 1 Zylinder Kolbenstange
- 5: Zwischenrohr
- 7: Führungs- Dichtungseinheit
- 9: Kolbeneinheit
- 11: Kolbenventilanordnung
- 13: Bodenplatte
- 15: Bodenventilanordnung
- 17: Behälterrohr
- 19: Ringraum
- 21a; 21b: Arbeitskammern
- 23: Hockdruckteilstrecke
- 25: Bohrung
- 27: Dämpfventileinrichtung
- 29: Niederdruckteilstrecke
- 31: äußeres Gehäuse
- 33: Ventilgehäuseeinsatz
- 35: Anschluss
- 37: Ventilsitzscheibe
- 39: Hauptstufenventilkörper
- 41: Einlaufventil
- 43: Durchgangsöffnung
- 45: Steuerraum
- 47: Schließfeder
- 49: Verbindungskanal
- 51: Sammelraum
- 53: Vorstufenventil
- 55: Magnetspule
- 57: Vorstufenventhkörper
- 59: Ventilring
- 61: Abflussöffnung
- 63a; 63b: Notbetriebkanäle
- 65: Vorspannfeder
- 67: Anker
- 69a; 69b: Notbetriebventile
- 71a; 71b: Schließfeder
- 73a; 73b: Gehäuse
- 75a; 75b: Ventilelement
- 77a; 77b: Abstützscheibe
- 79: Dämpfventilaufsatz
- 81: Durchtrittskanal
- 83: Ventilscheibe
- 85: Befestigungsmittel
- 87: Verteilerkanal

## Patentansprüche

1. Verstellbare Dämpfventileinrichtung, umfassend einen Aktuator (55;67) zur Ansteuerung eines Dämpfventils (53;39) wobei einer Abflussöffnung (61) des Dämpfventils (53;39) ein Notbetriebventil (69; 69a) über einen Notbetriebkanal (63a) parallel geschaltet ist, wobei das Notbetriebventil (69; 69a) einen Ventilkörper (75a) aufweist, der von einer Feder (71 a) in Schließposition vorgespannt wird,
**dadurch gekennzeichnet,**
**dass** dem Notbetriebventil (69a) ein zweites Notbetriebventil (69b) parallel geschaltet ist, das eine vom ersten Notbetriebventil (69a) abweichende Öffnungscharakteristik aufweist.

2. Dämpfventileinrichtung nach Anspruch 1,
**dadurch gekennzeichnet,**
**dass** die Dämpfventileinrichtung (27) einen Ventilgehäuseeinsatz (33) aufweist, in dem ein vom Aktuator (55; 67) zumindest mittelbar angesteuerter Dämpfventilkörper (39) angeordnet ist, wobei der Ventilgehäuseeinsatz (33) mehrere Notbetriebkanäle (63a; 63b) aufweist, die mit Notbetriebsventilen (69a; 69b) bestückt sind.

3. Dämpfventileinrichtung nach Anspruch 2,
**dadurch gekennzeichnet,**
**dass** die Notbetriebkanäle (63A, 63b) im Ventilgehäuseeinsatz (33) als Radialkanäle ausgeführt sind.

4. Dämpfventileinrichtung nach Anspruch 3,
**dadurch gekennzeichnet,**
**dass** die Radialkanäle (63a; 63b) an einem Sammelraum (51) angeschlossen sind, der wiederum mit der Abflussöffnung (61) der Dämpfventileinrichtung (27) verbunden ist.

5. Dämpfventileinrichtung nach Anspruch 1,
**dadurch gekennzeichnet,**
**dass** das Notbetriebventil (69a; 69b) ein Gehäuse (73a; 73b) aufweist, in dem ein Ventilelement (75a; 75b) angeordnet ist, das von einer innerhalb des Gehäuses (73a; 73b) angeordneten Schließfeder (71a; 71 b) in eine Schließposition vorgespannt ist, wobei die Schließfeder (71 a; 71 b) in ihrer Schließkraft einstellbar ist.

6. Dämpfventileinrichtung nach Anspruch 5,
**dadurch gekennzeichnet,**
**dass** das Gehäuse (73a; 73b) des Notbetriebventils (69a; 69b) im Ventilgehäuseeinsatz (33) eingeschraubt ist.

## Claims

1. Adjustable damping valve device, comprising an actuator (55; 67) for activating a damping valve (53; 39), an emergency valve (69; 69a) being connected in parallel to an outflow port (61) of the damping valve (53; 39) via an emergency duct (63a), the emergency valve (69; 69a) having a valve body (75a) which is prestressed in the closing position by a spring (71a),
**characterized in that**
a second emergency valve (69b) is connected in parallel to the emergency valve (69a) and has an opening characteristic deviating from the first emergency valve (69a).

2. Damping valve device according to Claim 1,
**characterized in that**
the damping valve device (27) has a valve housing insert (33) in which a damping valve body (39) activated at least indirectly by the actuator (55; 67) is arranged, the valve housing insert (33) having a plurality of emergency ducts (63a; 63b) which are equipped with emergency valves (69a; 69b).

3. Damping valve device according to Claim 2,
**characterized in that**
the emergency ducts (63a, 63b) in the valve housing insert (33) are formed as radial ducts.

4. Damping valve device according to Claim 3,
**characterized in that**
the radial ducts (63a; 63b) are connected to a collecting space (51) which is connected in turn to the outflow port (61) of the damping valve device (27).

5. Damping valve device according to Claim 1,
**characterized in that**
the emergency valve (69a; 69b) has a housing (73a; 73b) in which is arranged a valve element (75a; 75b) which is prestressed into a closing position by a closing spring (71a; 71b) arranged inside the housing (73a; 73b), the closing spring (71a; 71b) having an adjustable closing force.

6. Damping valve device according to Claim 5,
**characterized in that**
the housing (73a; 73b) of the emergency valve (69a; 69b) is screwed in the valve housing insert (33).

## Revendications

1. Dispositif de soupape d'amortissement réglable, comportant un actionneur (55 ; 67) pour la commande d'une soupape d'amortissement (53 ; 39), une soupape de fonctionnement d'urgence (69 ; 69a) étant montée en parallèle à une ouverture de sortie (61) de la soupape d'amortissement (53 ; 39) par le biais d'un conduit de fonctionnement d'urgence (63a), la soupape de fonctionnement d'urgence (69 ; 69a) comprenant un corps de soupape (75a) qui est précontraint dans la position de fermeture par un ressort (71a),
**caractérisé en ce**
**qu'**une deuxième soupape de fonctionnement d'urgence (69b) est montée en parallèle à la soupape de fonctionnement d'urgence (69a), laquelle deuxième soupape de fonctionnement d'urgence présente une caractéristique d'ouverture différant de celle de la première soupape de fonctionnement d'urgence (69a).

2. Dispositif de soupape d'amortissement selon la revendication 1,
**caractérisé en ce**
**que** le dispositif de soupape d'amortissement (27) comprend un insert de boîtier de soupape (33) dans lequel est disposé un corps de soupape d'amortissement (39) commandé au moins indirectement par l'actionneur (55 ; 67), l'insert de boîtier de soupape (33) comprenant plusieurs conduits de fonctionnement d'urgence (63a ; 63b) qui sont pourvus de soupapes de fonctionnement d'urgence (69a ; 69b).

3. Dispositif de soupape d'amortissement selon la revendication 2,
**caractérisé en ce**
**que** les conduits de fonctionnement d'urgence (63a, 63b) dans l'insert de boîtier de soupape (33) sont réalisés sous forme de conduits radiaux.

4. Dispositif de soupape d'amortissement selon la revendication 3,
**caractérisé en ce**
**que** les conduits radiaux (63a ; 63b) sont raccordés à un espace collecteur (51) qui est pour sa part relié à l'ouverture de sortie (61) du dispositif de soupape d'amortissement (27).

5. Dispositif de soupape d'amortissement selon la revendication 1,
**caractérisé en ce**
**que** la soupape de fonctionnement d'urgence (69a ; 69b) comprend un boîtier (73a ; 73b) dans lequel est disposé un élément de soupape (75a ; 75b) qui est précontraint dans une position de fermeture par un ressort de fermeture (71a ; 71b) disposé à l'intérieur du boîtier (73a ; 73b), la force de fermeture du ressort de fermeture (71a ; 71b) pouvant être ajustée.

6. Dispositif de soupape d'amortissement selon la revendication 5,
**caractérisé en ce**
**que** le boîtier (73a ; 73b) de la soupape de fonctionnement d'urgence (69a ; 69b) est vissé dans l'insert de boîtier de soupape (33).
